# EUROPEAN PATENT APPLICATION

(11) **EP 4 184 757 A1**
(43) Date of publication of application: **24.05.2023**
(21) Application number: 21843547.7
(22) Date of filing: 16.07.2021
(51) Int. Cl.: H02K 1/27, H02K 7/00, H02K 1/14

(54) **MOTOR**

(30) Priority: 17.07.2020 KR 20200088742
(71) Applicant: LG Innotek Co., Ltd., Seoul 07796 (KR)
(72) Inventor: PYEON, Jin Su, Seoul 07796 (KR); KIM, Seong Jin, Seoul 07796 (KR)
(74) Representative: Plasseraud IP
(86) International application number: PCT/KR2021/009159
(87) International publication number: WO 2022/015096

(57) **Abstract**

The present invention may provide a motor including a shaft, a rotor coupled to the shaft, and a stator disposed to correspond to the rotor, wherein the rotor includes a rotor core and magnets coupled to the rotor core, the magnets include a first unit magnet disposed on an outer circumferential surface of the rotor core in a circumferential direction and a second unit magnet disposed adjacent to the first unit magnet, the first unit magnet includes a first surface facing the rotor core and a first curved surface facing the stator, the second unit magnet includes a second surface facing the rotor core and a second curved surface facing the stator, a length of the first surface in the circumferential direction is different from a length of the second surface in the circumferential direction, and a radius of curvature of the first curved surface is different from a radius of curvature of the second curved surface.

## Description

### [Technical Field]

The present invention relates to a motor.

### [Background Art]

An electric power steering (EPS) system is an apparatus which secures turning stability of a vehicle and provides a rapid restoring force so that a driver can drive the vehicle safely. The EPS system controls a vehicle's steering shaft to be driven by driving a motor using an electronic control unit (ECU) according to driving conditions detected by a vehicle speed sensor, a torque angle sensor, a torque sensor, and the like.

The motor includes a stator and a rotor. The stator may include teeth constituting a plurality of slots, and the rotor may include a plurality of magnets facing the teeth. The adjacent teeth are spaced apart from each other to constitute open slots. In this case, a cogging torque may be generated due to a difference in magnetic permeability between the stator formed of a metal material and the open slot, which is an empty space, when the rotor rotates. Such a cogging torque has a problem of affecting a sensitivity of steering or output power.

### [Disclosure]

### [Technical Problem]

Accordingly, an embodiment is intended to solve the above problems and directed to providing a motor capable of reducing a cogging torque.

Objectives to be achieved by the present invention are not limited to the above-described objective, and other objectives which are not described above will be clearly understood by those skilled in the art through the following descriptions.

### [Technical Solution]

One aspect of the present invention provides a motor including a shaft, a rotor coupled to the shaft, and a stator disposed to correspond to the rotor, wherein the rotor includes a rotor core and magnets coupled to the rotor core, the magnets include a first unit magnet disposed on an outer circumferential surface of the rotor core in a circumferential direction and a second unit magnet disposed adjacent to the first unit magnet, the first unit magnet includes a first surface facing the rotor core and a first curved surface facing the stator, the second unit magnet includes a second surface facing the rotor core and a second curved surface facing the stator, a length of the first surface in the circumferential direction is different from a length of the second surface in the circumferential direction, and a radius of curvature of the first curved surface is different from a radius of curvature of the second curved surface.

The length of the first surface in the circumferential direction may be in the range of 91% to 97% of the length of the second surface, and the radius of curvature of the first curved surface may be in the range of 95% to 100% of the radius of curvature of the second curved surface.

The length of the first surface in the circumferential direction may be in the range of 93% to 95% of the length of the second surface in the circumferential direction, and the radius of curvature of the second curved surface may be in the range of 95% to 100% of the radius of curvature of the first curved surface.

The length of the first surface in the circumferential direction may be in the range of 91% to 93% of the length of the second surface in the circumferential direction, and the radius of curvature of the second curved surface may be in the range of 95% to 100% of the radius of curvature of the first curved surface.

The length of the second surface in the circumferential direction may be in the range of 91% to 93% of the length of the first surface in the circumferential direction, and the radius of curvature of the second curved surface may be in the range of 100% to 105% of the radius of curvature of the first curved surface.

Another aspect of the present invention provides a motor including a shaft, a rotor coupled to the shaft, and a stator disposed to correspond to the rotor, wherein the rotor includes a rotor core and magnets coupled to the rotor core, the magnets include a first unit magnet disposed on an outer circumferential surface of the rotor core in a circumferential surface and a second unit magnet disposed adjacent to the first unit magnet, an area of a surface of the first unit magnet in contact with the rotor core is different from an area of a surface of the second unit magnet in contact with the rotor core, and a radius of curvature of a curved surface of the first unit magnet is different from a radius of curvature of a curved surface of the second unit magnet.

Still another aspect of the present invention provides a motor including a shaft, a rotor coupled to the shaft, and a stator disposed to correspond to the rotor, wherein the rotor includes a rotor core and magnets coupled to the rotor core, the magnets include a first unit magnet disposed on an outer circumferential surface of the rotor core in a circumferential direction and a second unit magnet disposed adjacent to the first unit magnet, a length of the first unit magnet in contact with the rotor core is different from a length of the second unit magnet in contact with the rotor in the circumferential direction, and a maximum thickness of the first unit magnet is different from a maximum thickness of the second unit magnet in a radius direction.

The first unit magnet and the second unit magnet may be alternately disposed in the circumferential direction.

The rotor core may include a third surface in contact with the magnet, and the third surface may be a flat surface.

A minimum thickness of the first unit magnet may be different from a minimum thickness of the second unit magnet in the radius direction.

A minimum distance between the first unit magnet and a tooth of the stator may be different from a minimum distance between the second unit magnet and a tooth of the stator.

A pair of first unit magnets may be symmetrically disposed with respect to a shaft center, and a pair of second unit magnets may be symmetrically disposed with respect to the shaft center.

### [Advantageous Effects]

According to embodiments, there is an advantageous effect of reducing a cogging torque.

### [Description of Drawings]

FIG. 1 is a view illustrating a motor according to an embodiment.
FIG. 2 is a view illustrating a stator and a rotor.
FIG. 3 is an enlarged view illustrating a magnet illustrated in FIG. 2.
FIG. 4 is a view illustrating a thickness of the magnet.
FIG. 5 is a set of graphs showing a comparison of a waveform of a cogging torque of a comparative example and a waveform of a cogging torque of an example illustrated in FIG. 3.
FIG. 6 is a graph showing a cogging torque corresponding to a radius of curvature of a second curved surface of a motor according to an embodiment under a first condition.
FIG. 7 is a table showing the cogging torque corresponding to the radius of curvature of the second curved surface of the motor according to the embodiment under the first condition.
FIG. 8 is a view illustrating a rotor on which magnets having different shapes and different sizes are disposed.
FIG. 9 is an enlarged view illustrating that of FIG. 8.
FIG. 10 is a view illustrating a thickness of the magnet of FIG. 8.
FIG. 11 is a set of graphs showing a comparison of a waveform of a cogging torque of a comparative example and a waveform of a cogging torque of an example illustrated in FIG. 9.
FIG. 12 is a graph showing a cogging torque corresponding to a radius of curvature of a second curved surface of a motor according to an embodiment under a second condition.
FIG. 13 is a table showing the cogging torque corresponding to the radius of curvature of the second curved surface of the motor according to the embodiment under a second condition.

### [Modes of the Invention]

A direction parallel to a longitudinal direction (vertical direction) of a shaft will be referred to as an axial direction, a direction perpendicular to the axial direction will be referred to as a radial direction based on the shaft, and a direction along a circle having a radius in the radial direction about the shaft will be referred to as a circumferential direction.

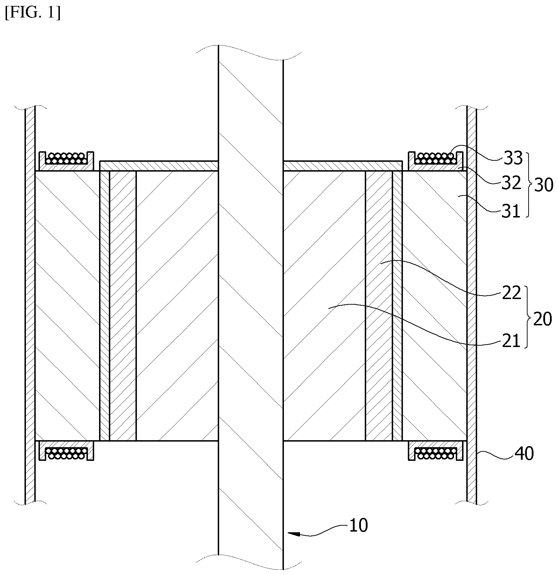

FIG. 1 is a view illustrating a motor 1 according to an embodiment.

Referring to FIG. 1, the motor 1 according to the embodiment may include a shaft 10, a rotor 20, a stator 30, a housing 400, a busbar 500, a sensing unit 600, and a substrate 700. Hereinafter, the term "inward" is referred to as a direction from the housing 400 toward the shaft 10 which is located at a center of the motor, and the term "outward" is referred to as a direction from the shaft 10 toward the housing 400 which is opposite to the inward.

The shaft 10 may be coupled to the rotor 20. When an electromagnetic interaction occurs between the rotor 20 and the stator 30 to which a current is supplied, the rotor 20 rotates, and the shaft 10 rotates in conjunction with the rotor 20. The shaft 10 is rotatably supported by bearings. The shaft 10 may be connected to a vehicle's steering system, and power may be transmitted to the vehicle's steering system through the shaft 10.

The rotor 20 is rotated by an electrical interaction with the stator 30. The rotor 20 may be disposed inside the stator 30. The rotor 20 may include a rotor core 21 and magnets 22 disposed on the rotor core 21. In this case, the rotor 20 may be a surface permanent magnet (SPM) type rotor in which the magnets 22 are disposed on an outer circumferential surface of the rotor core 21.

The stator 30 is disposed outside the rotor 20. The stator 30 may include a stator core 31, an insulator 32 mounted on the stator core 31, and a coil 33 mounted on the insulator 32. The coil 33 may be wound around the insulator 32. The insulator 32 is disposed between the coil 33 and the stator core 31 to serve to electrically insulate the stator core 31 from the coil 33. The coil 33 induces an electrical interaction with the magnets 22 of the rotor 20.

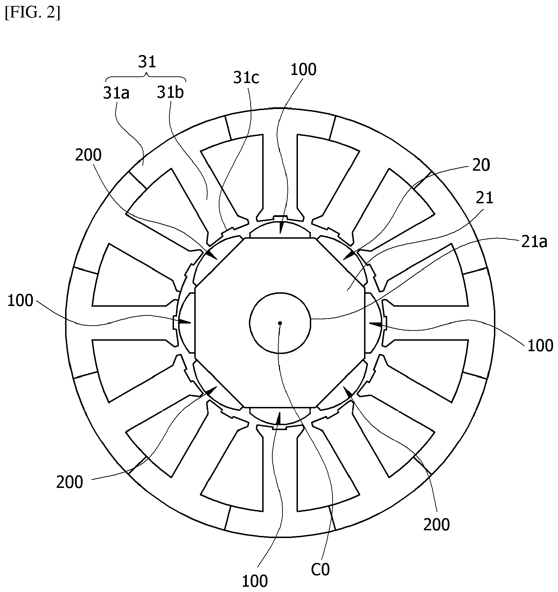

FIG. 2 is a view illustrating the stator 30 and the rotor 20.

Referring to FIG. 2, the stator core 31 may include yokes 31a and teeth 31b. Each of the teeth 31b may protrude from an inner circumferential surface of one of the yokes 31a. The teeth 31b may be provided as a plurality of teeth 31b. The number of the teeth 31b may be variously changed to correspond to the number of the magnets 22. For example, the number of the teeth 31b is 12 to form 12 slots. The number of magnets may be 8. The stator core 31 may be formed by combining a plurality of divided cores including the yokes 31a and the teeth 31b. Meanwhile, a notch 31c may be disposed on an edge of each of the teeth 31b. This is to reduce a cogging torque.

The magnets 22 are disposed on the outer circumferential surface of the rotor core 21. The magnets 22 may include a plurality of first unit magnets 100 and a plurality of second unit magnets 200. The first unit magnets 100 and the second unit magnets 200 may be disposed adjacent to each other around a shaft center C0 in the circumferential direction. The first unit magnets 100 and the second unit magnets 200 may be alternately disposed around the shaft center C0.

A pair of first unit magnets 100 may be symmetrically disposed with respect to the shaft center C0. In addition, a pair of second unit magnets 200 may also be symmetrically disposed with respect to the shaft center C0. For example, 4 first unit magnets 100 and 4 second unit magnets 200 may be disposed.

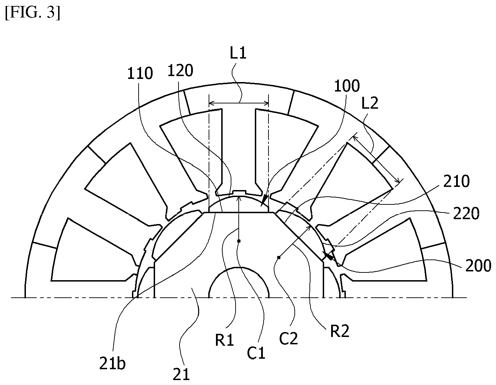

FIG. 3 is an enlarged view illustrating the magnet 22 illustrated in FIG. 2.

Referring to FIG. 3, a shape and a size of each of the first unit magnets 100 are different from a shape and a size of each of the second unit magnet 200. This is to change a waveform of a cogging torque to reduce the cogging torque.

The first unit magnet 100 may include a first surface 110 and a first curved surface 120. The first surface 110 may be a surface in contact with the rotor core 21 and may be a flat surface. The first curved surface 120 may be a surface facing the tooth 31b of the stator core 31 and may be a curved surface. The first surface 110 and the first curved surface 120 are connected by side surfaces. In the axial direction, the first surface 110 may be viewed as a straight line, and the first curved surface 120 may be viewed as a curved line. The first unit magnet 100 may have a bread type shape.

The second unit magnet 200 may include a second surface 210 and a second curved surface 220. The second surface 210 may be a surface in contact with the rotor core 21 and may be a flat surface. The second curved surface 220 may be a surface facing the tooth of the stator core 31 and may be a curved surface. The second surface 210 and the second curved surface 220 may be connected by side surfaces. When viewed in the axial direction, the second surface 210 may be a straight line, and the second curved surface 220 may be a curved line. The second unit magnet 200 may also have a bread type shape.

A length L1 of the first surface 110 in the circumferential direction may be different from a length L2 of the second surface 210 in the circumferential direction. Each of the length L1 of the first surface 110 in the circumferential direction and the length L2 of the second surface 210 in the circumferential direction is a straight distance from one end of the magnet 22 to the other end in the circumferential direction when the first surface 110 and the second surface 210 are the flat surfaces. The length L2 of the second surface 210 in the circumferential direction may be greater than the length L1 of the first surface 110 in the circumferential direction.

In addition, a radius R1 of curvature of the first curved surface 120 may be different from a radius R2 of curvature of the second curved surface 220. The radius R1 of curvature of the first curved surface 120 corresponds to a radius from a first center C1 of curvature to the first curved surface 120. The radius R2 of curvature of the second curved surface 220 corresponds to a radius from a second center C2 of curvature to the second curved surface 220. The first center C1 of curvature and the second center C2 of curvature may be positioned at points spaced a predetermined distance from the shaft center C0 in the radial direction. The radius R1 of curvature of the first curved surface 120 may be greater than the radius R2 of curvature of the second curved surface 220.

Meanwhile, the rotor core 21 may include a third surface 21b in contact with the magnets 22. The third surface 21b may be a flat surface.

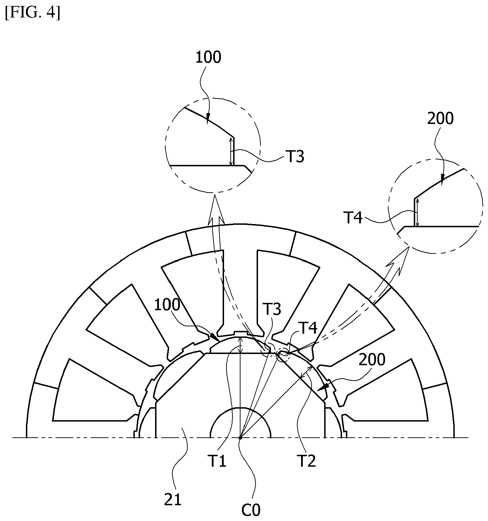

FIG. 4 is a view illustrating a thickness of the magnet 22.

Referring to FIG. 4, in the radial direction, a thickness of the first unit magnet 100 and a thickness of the second unit magnet 200 may be different.

For example, a maximum thickness T1 of the first unit magnet 100 and a maximum thickness T2 of the second unit magnet 200 may be different. In the radial direction, a maximum thickness of the magnet 22 may be a straight distance between the first surface 110 and the first curved surface 120 or between the second surface 210 and the second curved surface 220 based on a reference line passing through the shaft center C0 and a center of a length in a circumferential direction of the magnet 22. The maximum thickness T1 of the first unit magnet 100 may be greater than the maximum thickness T2 of the second unit magnet 200.

For example, a minimum thickness T3 of the first unit magnet 100 and a minimum thickness T4 of the second unit magnet 200 may be different. In the radial direction, a minimum thickness of the magnet 22 may be a straight distance between the first surface 110 and the first curved surface 120 or a straight distance between the second surface 210 and the second curved surface 220 based on a reference line passing through the shaft center C0 and an end of the magnet 22 in the circumferential direction. The minimum thickness T3 of the first unit magnet 100 may be greater than the minimum thickness T4 of the second unit magnet 200.

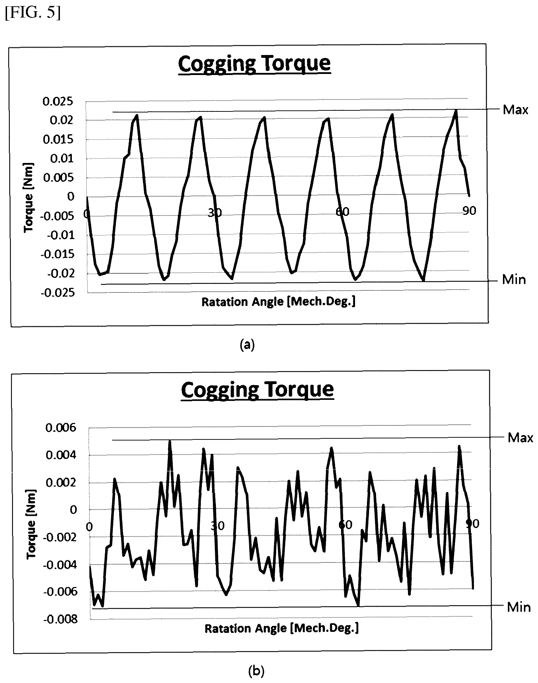

FIG. 5 is a set of graphs showing a comparison of a waveform of a cogging torque of a comparative example and a waveform of a cogging torque of an example illustrated in FIG. 3.

FIG. 5A is the graph showing the waveform of the cogging torque of the comparative example, and FIG. 5B is the graph showing the waveform of the cogging torque of the example.

The comparative example is a motor in which all magnets 22 have the same shape and size. However, the example is the motor in which the first unit magnets 100 and the second unit magnets 200 of which the shapes and sizes are different are alternately disposed in the circumferential direction. In the case of the comparative example, it can be seen that the cogging torque is high because the number of times at which the waveform of the cogging torque corresponding to a rotation angle reaches a maximum value Max (about 0.025 Nm) or a minimum value Min (about -0.025 Nm) is large. However, in the case of the example, it can be seen that the cogging torque is significantly reduced because the number of times at which the waveform of the cogging torque corresponding to the rotation angle reaches a maximum value Max (about 0.005 Nm) or a minimum value Min (about -0.007 Nm) is significantly reduced.

A reduction range of the cogging torque may be determined according to differences in shape and size between the first unit magnet 100 and the second unit magnet 200.

The length L1 of the first surface 110 in the circumferential direction may be in the range of 91% to 97% of the length L2 of the second surface 210 in the circumferential direction. Preferably, the length L1 of the first surface 110 in the circumferential direction may be in the range of 93% to 95% of the length L2 of the second surface 210 in the circumferential direction. In this case, the radius R2 of curvature of the second curved surface 220 may be in the range of 95% to 100% of the radius R1 of curvature of the first curved surface 120.

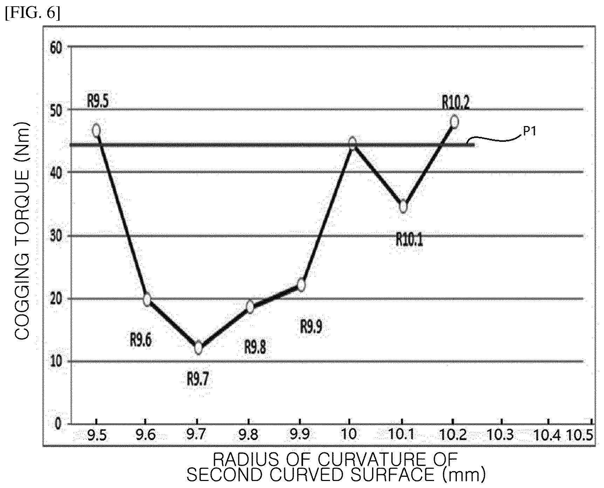

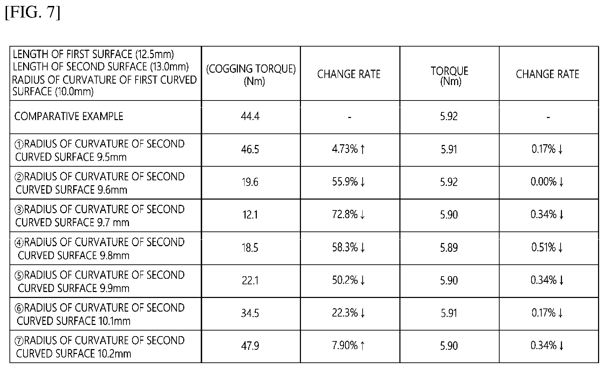

FIG. 6 is a graph showing the cogging torque corresponding to the radius R2 of curvature of the second curved surface 220 of the motor according to the embodiment under a first condition, and FIG. 7 is a table showing the cogging torque corresponding to the radius R2 of curvature of the second curved surface 220 of the motor according to the embodiment under the first condition.

As shown in FIGS. 6 and 7, under the first condition, the cogging torque corresponding to the radius R2 of curvature of the second curved surface 220 was measured.

The first condition is that the length L1 of the first surface 110 in the circumferential direction is 12.5 mm, the length L2 of the second surface 210 in the circumferential direction is 13.0 mm, the radius R1 of curvature of the first curved surface 120 is 10.0 mm, and there is no skew angle of the magnet 22. In the case of the comparative example, the first condition is that, in all of the magnets 22 in contact with a rotor core 21, lengths in a circumferential direction are the same as 13.0 mm, radii of curvature of curved surfaces of all of the magnets 22 facing a stator core 31 are 10 mm and the same, and there is also no skew angle of the magnets 22. Accordingly, under the first condition, the radius of curvature of the first unit magnet 100 is the same as the radius of curvature of the comparative example, and the length of the second unit magnet 200 is the same as the length of the comparative example. In addition, the length of the first unit magnet 100 is smaller than the length of the comparative example. Under the first condition, the length L1 of the first surface 110 in the circumferential direction is 96.1% of the length L2 of the second surface 210 in the circumferential direction.

Referring to FIGS. 6 and 7, line P1 of FIG. 6 shows the cogging torque (44.4 Nm) of the comparative example. Under the first condition, it can be seen that the cogging torque is gradually reduced as the radius R2 of curvature of the second curved surface 220 is changed from 9.5 mm to 9.9 mm, and the cogging torque is measured to be lower than the cogging torque (44.4 Nm) of the comparative example when the radius R2 of curvature of the second curved surface 220 is 9.6 mm or 9.7 mm.

It can be seen that the cogging torque measured when the radius R2 of curvature of the second curved surface 220 is 9.7 mm is decreased the most to 12.1 Nm that is 72.8% of that of the comparative example. It can be seen that, when the radius R2 of curvature of the second curved surface 220 is 9.8 mm or 9.9 mm, the cogging torque is increased compared when the radius R2 of curvature of the second curved surface 220 is 9.7 mm, but the cogging torque is reduced by 58.3% and 50.2%, respectively, compared to the comparative example.

It can be seen that, when the radius R2 of curvature of the second curved surface 220 is smaller than 9.5 mm or greater than 10.2 mm, the cogging torque is rather increased compared to the comparative example.

Since the radius of curvature of the comparative example and the radius of curvature of the first unit magnet 100 are 10 mm and the same, it can be seen that the cogging torque is measured to be lower than that of the comparative example in a section in which the radius R2 of curvature of the second curved surface 220 is in the range of 95% to 100% of the radius R1 of curvature of the first curved surface 120.

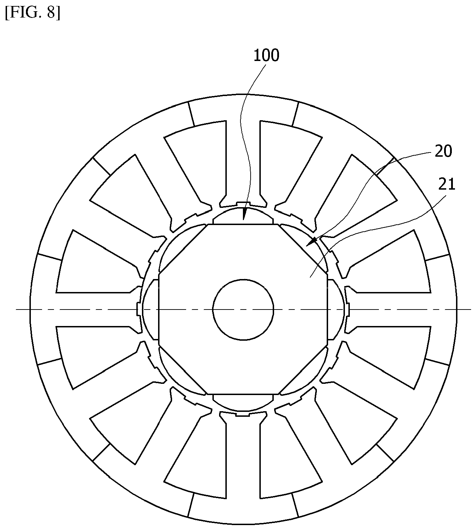

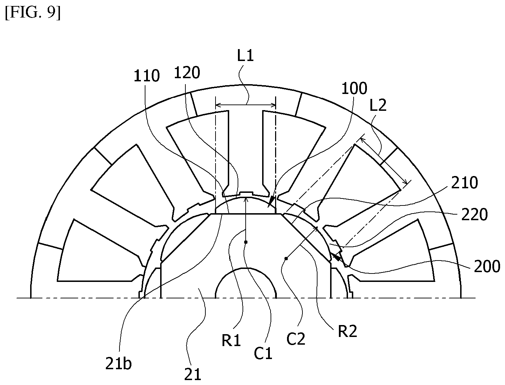

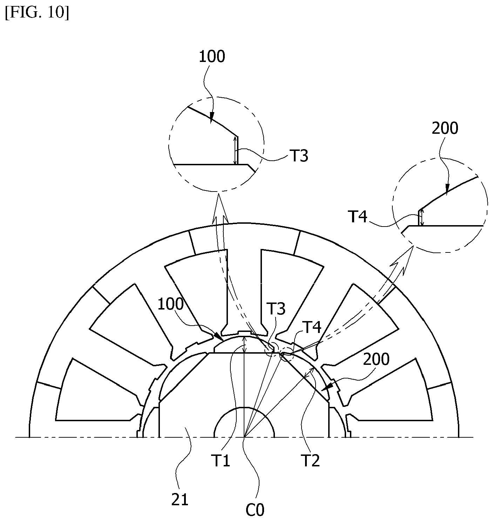

FIG. 8 is a view illustrating the rotor 20 on which the magnets 22 having different shapes and different sizes are disposed, FIG. 9 is an enlarged view illustrating the magnets 22 of FIG. 8, and FIG. 10 is a view illustrating thicknesses of the magnets 22 of FIG. 8.

Referring to FIGS. 8 to 10, the length L2 of the second surface 210 in the circumferential direction may be greater than the length L1 of the first surface 110 in the circumferential direction. A difference between the length L2 of the second surface 210 in the circumferential direction and the length L1 of the first surface 110 in the circumferential direction may be greater than a difference between the length L2 of the second surface 210 in the circumferential direction and the length L1 of the first surface 110 in the circumferential direction of the magnets 22 illustrated in FIG. 4. Unlike the magnet 22 of FIG. 4, the radius R2 of curvature of the second curved surface 220 may be greater the radius R1 of curvature of the first curved surface 120. Unlike the magnet 22 of FIG. 4, the maximum thickness T1 of the first unit magnet 100 may be smaller than the maximum thickness T2 of the second unit magnet 200. However, the minimum thickness T3 of the first unit magnet 100 may be greater than the minimum thickness T4 of the second unit magnet 200.

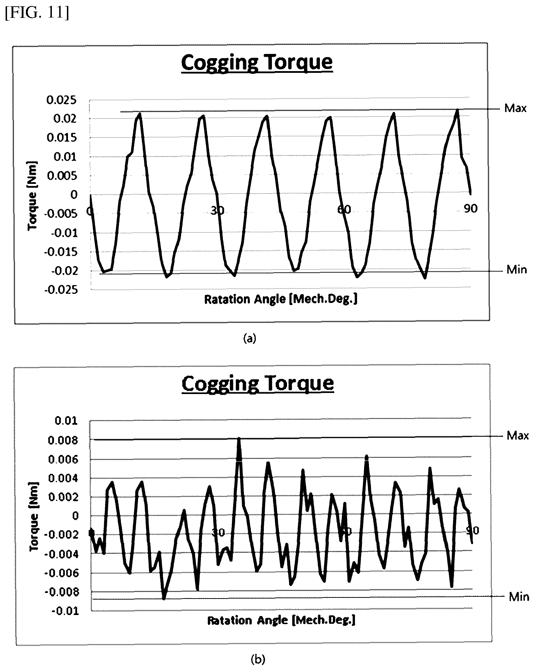

FIG. 11 is a set of graphs showing a comparison of a waveform of a cogging torque of a comparative example and a waveform of a cogging torque of an example illustrated in FIG. 9.

FIG. 11A is a view illustrating the waveform of the cogging torque of the comparative example, and FIG. 11B is a view illustrating the waveform of the cogging torque of the example.

The comparative example is a motor in which shapes and sizes of all of the magnets 22 are the same. However, the example is the motor in which the first unit magnets 100 and the second unit magnets 200, of which shapes and sizes are different, are alternatively disposed in the circumferential direction. In the case of the comparative example, it can be seen that the cogging torque is high because the number of times at which the waveform of the cogging torque corresponding to a rotation angle reaches a maximum value Max (about 0.025 Nm) or a minimum value Min (about - 0.025 Nm) is large. However, in the case of the example, it can be seen that the cogging torque is significantly reduced because the number of times at which the waveform of the cogging torque corresponding to the rotation angle reaches a maximum value Max (about, 0.008 Nm) or a minimum value Min (about -0.008 Nm) is significantly reduced.

In magnets 22 illustrated in FIG. 9, the length L1 of the first surface 110 in the circumferential direction may be in the range of 91% to 93% of the length L2 of the second surface 210 in the circumferential direction. In this case, the radius R2 of curvature of the second curved surface 220 may be in the range of 95% to 100% of the radius R1 of curvature of the first curved surface 120. Alternatively, the radius R2 of curvature of the second curved surface 220 may be in the range of 100% to 105% of the radius R1 of curvature of the first curved surface 120.

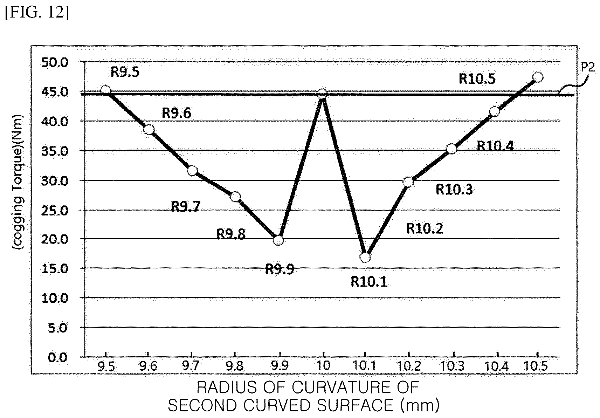

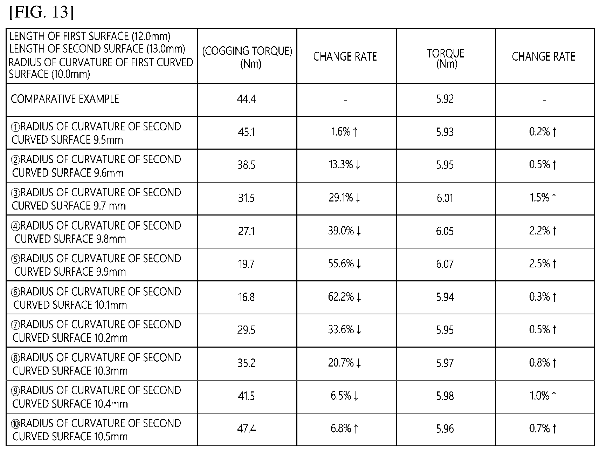

FIG. 12 is a graph showing the cogging torque corresponding to the radius R2 of curvature of the second curved surface 220 of the motor according to the embodiment under a second condition, and FIG. 13 is a table showing the cogging torque corresponding to the radius R2 of curvature of the second curved surface 220 of the motor according to the embodiment under a second condition.

As illustrated in FIGS. 12 and 13, under the second condition, the cogging torque corresponding to the radius R2 of curvature of the second curved surface 220 was measured.

The second condition is that, the length L1 of the first surface 110 in the circumferential direction is 12.0 mm, the length L2 of the second surface 210 in the circumferential direction is 13.0 mm, and the radius R1 of curvature of the first curved surface 120 is 10.0 mm. In the case of the comparative example, a condition is that, in all of the magnets 22 in contact with a rotor core 21, lengths in the circumferential direction are the same as 13.0 mm, and radii of curvature of curved surfaces of all of the magnets 22 facing a stator core 31 are 10 mm and the same. Accordingly, under the second condition, the radius of curvature of the first unit magnet 100 is the same as the radius of curvature of the comparative example, and the length of the second unit magnet 200 is the same as a length of that of the comparative example. In addition, the length of the first unit magnet 100 is smaller than a length of that of the comparative example. Under the second condition, the length L1 of the first surface 110 in the circumferential direction is 92.3% of the length L2 of the second surface 210 in the circumferential direction.

Referring to FIGS. 12 and 13, line P2 of FIG. 12 shows the cogging torque (44.4 Nm) of the comparative example. Under the second condition, the cogging torque is reduced as the radius R2 of curvature of the second curved surface 220 is changed from 9.5 mm to 9.9 mm. It can be seen that the cogging torque was measured to be lower than the cogging torque (44.4 Nm) of the comparative example when the radius R2 of curvature of the second curved surface 220 is in the range of 9.6 mm to 9.7 mm. It can be seen that, in a section in which the radius R2 of curvature of the second curved surface 220 is in the range of 9.5 mm to 9.9 mm, the cogging torque measured when the radius R2 of curvature of the second curved surface 220 is 9.9 mm is reduced the most to 19.7 Nm that is 55.6% of that of the comparative example.

Meanwhile, it can be seen that, in a section in which the radius R2 of curvature of the second curved surface 220 is in the range of 10.1 mm to 10.4 mm, although the cogging torque is increased compared when the radius R2 of curvature of the second curved surface 220 is 9.9 mm, the cogging torque is greatly smaller than that of the comparative example. It can be seen that, in a section in which the radius R2 of curvature of the second curved surface 220 is in the range of 9.5 mm to 10.5 mm, the cogging torque measured when the radius R2 of curvature of the second curved surface 220 is 10.1 mm is reduced the most to 16.8 Nm that is 62.2% of that of the comparative example.

It can be seen that, when the radius R2 of curvature of the second curved surface 220 is smaller than 9.5 mm or greater than 10.5 mm, the cogging torque is rather increased compared to the comparative example.

Since the radius of curvature of the comparative example and the radius of curvature of the first unit magnet 100 are 10 mm and the same, it can be seen that, in a section in which the radius R2 of curvature of the second curved surface 220 is in the range of 95% to 100% and in the range of 100% to 105% of the radius R1 of curvature of the first curved surface 120, the cogging torque is measured to be lower than that of the comparative example.

The above-described embodiment can be used in various devices for vehicles, home appliances, and the like.

## Claims

1. A motor comprising:
a shaft;
a rotor coupled to the shaft; and
a stator disposed to correspond to the rotor,
wherein the rotor includes a rotor core and magnets coupled to the rotor core,
the magnets include a first unit magnet disposed on an outer circumferential surface of the rotor core in a circumferential direction and a second unit magnet disposed adjacent to the first unit magnet,
the first unit magnet includes a first surface facing the rotor core and a first curved surface facing the stator,
the second unit magnet includes a second surface facing the rotor core and a second curved surface facing the stator,
a length of the first surface in the circumferential direction is different from a length of the second surface in the circumferential direction, and
a radius of curvature of the first curved surface is different from a radius of curvature of the second curved surface.

2. The motor of claim 1, wherein:
the length of the first surface in the circumferential direction is in the range of 91% to 97% of the length of the second surface in the circumferential direction; and
the radius of curvature of the first curved surface is in the range of 95% to 100% of the radius of curvature of the second curved surface.

3. The motor of claim 1, wherein:
the length of the first surface in the circumferential direction is in the range of 93% to 95% of the length of the second surface in the circumferential direction; and
the radius of curvature of the second curved surface is in the range of 95% to 100% of the radius of curvature of the first curved surface.

4. The motor of claim 1, wherein:
the length of the first surface in the circumferential direction is in the range of 91% to 93% of the length of the second surface in the circumferential direction; and
the radius of curvature of the second curved surface is in the range of 95% to 100% of the radius of curvature of the first curved surface.

5. The motor of claim 1, wherein:
the length of the second surface in the circumferential direction is in the range of 91% to 93% of the length of the first surface in the circumferential direction; and
the radius of curvature of the second curved surface is in the range of 100% to 105% of the radius of curvature of the first curved surface.

6. A motor comprising:
a shaft;
a rotor coupled to the shaft; and
a stator disposed to correspond to the rotor,
wherein the rotor includes a rotor core and magnets coupled to the rotor core,
the magnets include a first unit magnet disposed on an outer circumferential surface of the rotor core in a circumferential surface and a second unit magnet disposed adjacent to the first unit magnet,
an area of a surface of the first unit magnet in contact with the rotor core is different from an area of a surface of the second unit magnet in contact with the rotor core, and
a radius of curvature of a curved surface of the first unit magnet is different from a radius of curvature of a curved surface of the second unit magnet.

7. A motor comprising:
a shaft;
a rotor coupled to the shaft; and
a stator disposed to correspond to the rotor,
wherein the rotor includes a rotor core and magnets coupled to the rotor core,
the magnets include a first unit magnet disposed on an outer circumferential surface of the rotor core in a circumferential direction and a second unit magnet disposed adjacent to the first unit magnet,
a length of the first unit magnet in contact with the rotor core is different from a length of the second unit magnet in contact with the rotor in the circumferential direction, and
a maximum thickness of the first unit magnet is different from a maximum thickness of the second unit magnet in a radius direction.

8. The motor of claim 1, wherein the first unit magnet and the second unit magnet are alternately disposed in the circumferential direction.

9. The motor of any one of claims1, 6, and 7, wherein:
the rotor core includes a third surface in contact with the magnet; and
the third surface is a flat surface.

10. The motor of any one of claims1, 6, and 7, wherein a minimum thickness of the first unit magnet is different from a minimum thickness of the second unit magnet in the radius direction.
